# EUROPEAN PATENT APPLICATION

(11) **EP 4 657 302 A1**
(43) Date of publication of application: **03.12.2025**
(21) Application number: 25172817.6
(22) Date of filing: 28.04.2025
(51) Int. Cl.: G06F 30/17, G06F 30/27, G06N 20/00, G06F 119/20

(54) **INTELLIGENT CAD TOOL FOR DESIGN OF MECHANICAL SYSTEMS**

(30) Priority: 31.05.2024 US 202418679488
(71) Applicant: HONDA MOTOR CO., LTD., Tokyo 105-8404 (JP)
(72) Inventor: Rios, Thiago, 63073 Offenbach/Main (DE); Menzel, Stefan, 63073 Offenbach/Main (DE); Detwiler, Duane, Raymond, OH, 43067-9705 (US); Bujny, Mariusz, 43-190 Mikolow (PL)
(74) Representative: Roth, Sebastian

(57) **Abstract**

The disclosure relates to a computer-implemented method for assisting a design engineer in generating a 3D design of a physical object. The method comprises steps of, in a training phase, acquiring sequences of computer-aided design operations for designs of physical objects and metadata associated with the sequences of computer-aided design operations. The method proceeds with converting the acquired sequences of computer-aided design operations into tokens of computer-aided design operations, and converting the metadata into metadata vectors. The method then trains a model based on the tokens of the computer-aided design operations and the metadata vector, and stores the trained model in a database. In an application phase, the method executes steps of acquiring a user input for the 3D design of the physical object including design constraints and a current sequence of computer-aided design operations, converting the acquired current sequence of computer-aided design operations into one or more tokens of the current design sequence, converting the acquired design constraints into a vector of design constraints, predicting at least one computer-aided design operation based on the trained model stored in the database, and at least one of the tokens of the current design sequence and the vector of the design constraints, and generating information including the predicted at least one computer-aided design operation and outputting the generated information in a signal to the user.

## Description

### TECHNICAL FIELD OF THE DISCLOSURE

The disclosure relates to the general field of computer-aided design (CAD) and computer-implemented cooperative assistance systems and, in particular, proposes a computer-implemented method for supporting engineers in developing virtual representations of 3D objects within a CAD software environment.

### TECHNICAL BACKGROUND

CAD software (CAD systems) represents a valuable tool for engineers designing physical objects in a product development process. CAD software tools support the design engineer in creating virtual representations of physical objects that may be parts utilized in complex mechanical systems of land vehicles, naval vehicles, aircraft, spacecraft, and both mobile and stationary heavy machinery.

Currently available CAD systems include tools that enable the engineer to manipulate geometric characteristics of the design of the physical object in order to satisfy functional requirements specified in the preceding phases of the product development process. Fulfilling the functional requirements includes achieving specific physical characteristics of the physical object, which may include predetermined moments of inertia of the physical object, or the capability to cope with predetermined mechanical loads acting on the physical object.

Using the CAD system, the engineer designs manually most geometric characteristics of the design of the physical object, and uses software tools implementing optimization methods for improving the design with regard to a design performance of the physical object during the product development process. The engineer evaluates a design with regard to one or multiple criteria in order to determine the design performance of the design. The criteria may include, e.g., the capability to cope with predetermined mechanical loads acting on the physical according to the requirements for the product development process. The criteria may also include criteria including manufacturing feasibility and manufacturing process-related criteria.

Usually, the design process forming part of the product development process is required to follow a rule-based and often standardized methodology, e.g., the V-model, which has been standardized for a plurality of organizations and development processes. Product development under the V-model, e.g., is time-consuming and costly due to often involving plural cycles of coordination between engineers specialized in different and complex technical domains. This may represent a challenge in particular for young engineers with only limited experience in the product development process.

The disclosure aims at improving the product development process for complex physical objects and many requirements with regard to lowering a burden on the design engineer, reducing the required time, and reducing the required cost of the development process.

### SUMMARY

The computer-implemented method according to the first aspect provides an advantageous solution.

The computer-implemented method according to the first aspect assists a design engineer (user) in generating a 3D design of a physical object. The method comprises steps of, in a training phase, acquiring sequences of computer-aided design operations (CAD operations) for designs of physical objects and metadata associated with the acquired sequences of computer-aided design operations for designs of physical objects. The method converts the acquired sequences of computer-aided design operations into tokens of computer-aided design operations, and converts the metadata into metadata vectors. The method then trains a model based on the tokens of the computer-aided design operations and the metadata vector, and stores the trained model in a database. In an application phase, the method proceeds with steps of acquiring a user input for the design of the physical object including design constraints and a current sequence of computer-aided design operations. The method converts the acquired current sequence of computer-aided design operations into one or more tokens of the current design sequence, and converts the acquired design constraints into a vector of design constraints. The method then predicts at least one computer-aided design operation based on the trained model stored in the database, and at least one of the one or more tokens of the current design sequence and the vector of the design constraints, and generates information including the predicted at least one computer-aided design operation. The method outputs the generated information in a signal to the user.

The program according to the second aspect and the non-transitory recording medium storing the program according to the third aspect provide advantageous solutions with corresponding advantages.

The dependent claims define further advantageous embodiments.

### BRIEF DESCRIPTION OF THE DRAWINGS

The aspects and implementation of the present disclosure will be explained in the following description of specific embodiments in relation to the enclosed drawings, in which:
Fig. 1 illustrates a schematic flow diagram including steps of the training phase for training a model in an embodiment of the computer-implemented method;
Fig. 2 shows a schematic flow diagram including steps of the application phase of applying the model for assisting the user in generating the 3D design of the physical object in an embodiment of the computer-implemented method;
Fig. 3 illustrates a simplified workflow of the intelligent CAD system according to an embodiment;
Fig. 4 illustrates a simplified workflow of the data preprocessing in the intelligent CAD system according to an embodiment;
Fig. 5 shows a simplified data structure of test and training data generated in the data splitting process in the intelligent CAD system according to an embodiment;
Fig. 6 illustrates a simplified workflow of the model training process in the intelligent CAD system according to an embodiment;
Fig. 7 illustrates a simplified workflow of an online prediction processing in the intelligent CAD system according to an embodiment; and
Fig. 8 presents a schematic of an overview on a high level of abstraction of a structural architecture of the CAD system.

The detailed description of the accompanying figures uses same references numerals for indicating same, similar, or corresponding elements in different instances. The description of figures dispenses with a detailed discussion of same reference numerals in different figures whenever considered possible without adversely affecting comprehensibility. Generally, operations of the disclosed processes may be performed in an arbitrary order unless otherwise provided in the claims.

### DETAILED DESCRIPTION

The computer-implemented method according to the first aspect provides a system that supports the engineer to add annotations and to adapt or modify designs of physical objects to comply with unintuitive design constraints online during an ongoing design process.

In the following description of embodiments, designs of physical objects are three-dimensional designs (3D designs).

In this context, the added annotations correspond to textual information with reference to specific features in the design, e.g., dimensional tolerances and surface roughness. The computer-implemented method provides a CAD system (CAD tool), which aims at accelerating the design process for both the young engineer, who lacks experience in industrial design processes, and the senior design engineer, who works on complex system designs, which have multiple dependencies between different elements and often conflicting requirements. Moreover, the CAD design system may also prove helpful to engineers working in multidisciplinary design projects. In multidisciplinary design projects, at least some of the constraints originate from technical domains that the engineer responsible in the current stage of the product design process has only superficial knowledge of or are largely unknown to him.

In the current product design process, the engineer manually modifies and adjusts 3D designs to comply with manufacturing and cost constraints based on simulation, and, based on the experience of the engineer. The current approach is prone to errors, which either may result from a negligence of relevant criteria or caused by a lack of experience. A common approach to overcome these challenges is to utilize predetermined design templates in the product design process. Utilizing design templates allows engineers to create virtual 3D models of the design within a specified set of rules. The approach of using design templates is an effective solution for minor design modifications; however, a design template can result in constraints too strict for generating an advantageous design for the physical object. In some instances, in the development of entirely new design concepts, utilizing existing design templates may even be not possible. The computer-implemented method according to the first aspect provides a CAD tool for an intelligent CAD system that proposes design changes or annotations in a collaborative manner to its user. Hence, based on a design of the physical object in an intermediate state, the system generates and outputs to the user potential options to develop the current intermediate design further towards a design target. The intelligent CAD system allows the engineer using of the intelligent CAD design system to modify the design, and feed the modifications back to the intelligent CAD system for generating new design proposals.

The method represents the physical object as a sequence of CAD operations, sometimes termed tree of CAD operations. The sequence of CAD operations corresponds to a sequence of actions taken by the engineer to generate the specific 3D design of the physical object. An exemplary sequence of CAD operations for generating a physical object having the form of a cylinder may include defining a circle with radius *R* and a center *C* in a first operation, and subsequently, in a second operation extruding the generated circle into a direction *n* normal to the circle for a distance *D*. The sequence of operations for the cylinder may be represented by
(circle, *C*, *R*) → (extrude A, *n*, *D*),
in which the letter *A* is an index of the operation. The computer-implemented method enables a computer system to read and modify sequences of CAD operations by encoding the operations and their features into numerical tokens. In the example, if sketches are represented by the integer numeral *1* and circles by the integer numeral *5*, the first part of the aforementioned exemplary sequence of operations would be encoded as {1, 5, *R*}, including the value *R* for the radius of the circle.

The engineer can provide the CAD system including the computer-implemented method with additional information, e.g., information on a target manufacturing process, on target cost, or on weight requirements in the form of metadata associated with the sequence of CAD operations. Considering the provided additional information, the computer-implemented method predicts potential steps to add to the sequence of operations, such that the predicted design of the physical object meets selected criteria specified in the metadata, generates the corresponding designs resulting from the predicted sequence of operations, and outputs the respective information to the user, e.g. via a display.

The computer-implemented method may use the information generated based on the predicted sequence of operations for identifying designs of physical objects in the database, that were designed by executing a similar sequence of CAD operations. The user may use the output information on the identified designs from the database for further design modifications or as an alternative way to specify design preferences to the intelligent CAD system including the computer-implemented method.

The computer-implemented method enables to provide an intelligent CAD system for the design engineer that supports a collaborative implementation of the product design process for a physical object. The method follows the standard and established CAD design flow in the product development process, and enhances the CAD design flow by inferring next CAD operation(s) in the sequence of CAD operations, thereby realizing an implicit assistance to the engineer. This will result in a high acceptance for the approach of the computer-implemented method by its users.

Contrary thereto, methods as recently proposed that base on prompting state-of-the-art large-language models (LLMs) in the product design process inherently utilize textual representations. The methods further use the CAD APIs to generate 3D geometries based on the input codes returned by a machine-learning model. Due to using textual representations, the LLM-based methods suffer from deficits when used to realize tasks specific to the mechanical design of physical objects. As a result, LLM-based approaches often provide structurally infeasible designs, as the LLM-based approaches realize a concept of a product design process in which the design engineer interacts with a CAD design software using exclusively textual inputs.

According to an embodiment, the computer-implemented method includes, in the training phase, training the model by automatically applying a machine-learning algorithm for encoding the tokens of computer-aided design operations in a plurality of vectors, wherein each vector corresponds to a computer-aided design operation or a sequence of computer-aided design operations, and storing the plurality of vectors in the database.

The method uses tokens of sequences of computer-aided design operations for encoding the training data in the training phase. The method thereby efficiently stores entire sequences of computer-aided design operations, and learns from the stored entire sequences of computer-aided design operations for predicting the user suitable future sequences of computer-aided design operations in a computationally efficient manner.

The computer-implemented method stores the plurality of vectors, which essentially include elements of numerical values in an efficient manner and operations performed based on the sequences of computer-aided design operations, e.g., learning the model, are computationally efficient.

The computer-implemented method according to an embodiment comprises, in the application phase, obtaining automatically the current sequence of computer-aided design operations that the user executes online while the user is designing the physical object using a computer-aided design software.

Hence, the method may provide online support by suggesting the user how to proceed in the product design process for the physical object, by analyzing the current approach of the user inherent to the acquired current sequence of computer-aided design operations, and providing suitable predictions for computer-aided design operations to approach his design targets. The predictions base on a knowledge base evaluated and used for training the model offline, and are generated online using information on the recent history of the computer-aided design operations performed by the user.

The computer-implemented method according an embodiment comprises, in the application phase, obtaining a field of application of the physical object, and including the obtained field of application in the vector of design constraints.

Hence, the user may provide a general constraint that enables to focus efficiently the predicted sequence of design operations to the field of the physical object as the current design target. Identifying suitable and similar sequences of computer-aided design operations by the trained model improves with regard to computation efficiency and speed, and the probability of an infeasible suggested sequence of computer-aided design operations decreases.

According to an embodiment of the computer-implemented method, the metadata associated with at least one of the sequences of computer-aided design operations comprises information on at least one of design objectives, design constraints, mechanical performance of a physical object, in particular simulated mechanical performance from a numerical simulation, manufacturing process, and field of application of a physical object of the respective one of the sequence of computer-aided design operations.

Thus, the trained model, and consequentially the predicted sequence of computer-aided design operations combines the advantages of regarding histories of computer-aided design operations on the one hand with required characteristics of the physical object representing the design target of the product design process on the other hand in one CAD design framework.

The computer-implemented method according to an embodiment comprises, in the application phase, determining distances between vectors encoding the current sequence of computer-aided design operations and vectors encoding sequences of computer-aided design operations stored in the database, and determining similarities of the current sequence of computer-aided design operations with sequences of computer-aided design operations based on the determined distances. The method then identifies at least one other design of another physical object based on the determined similarities. The method generates and outputs information including a design representation of the identified at least one other design of a physical object to the user. The distances between vectors can be computed using known methods such as the cosine similarity.

The similarity between the sequences of the computer-aided design operations increases (is greater) when the determined distance between the corresponding vectors decreases. The method may, e.g. determine the current sequence of computer-aided design operations and vectors encoding sequences of computer-aided design operations to be similar, when the determined distance is equal or below a predetermined threshold.

Hence, the computer-implemented method efficiently identifies and proposes design alternatives for the physical object to the user.

According to an embodiment, the computer-implemented method, in the training phase, training the model comprises using the stored vectors as features for the machine-learning algorithm for classifying the physical objects into different categories according to functional type of the physical objects or according to the manufacturing process of the physical objects.

Thus, the training of the machine-learning model ensures that the output suggestions to the user regard the specific type and application field of the physical object. The suggested sequence of computer-aided design operations already considers a manufacturing phase of the physical object in the product design phase, and therefore the suggestions will most probably allow a smooth transition from a product design phase to a manufacturing phase without requiring an extensive and costly redesign before entering production.

The computer-implemented method according to an embodiment comprises, in the training phase, training the model including using the stored vectors as features for the machine learning algorithm for predicting at least one of a structural performance of the physical object and manufacturing cost of the physical object.

Thus, the method may propose, in the application phase, a sequence of computer-aided design operations to the user that regards criteria such as structural performance and manufacturing cost, and therefore represents a desirable further step towards a design of the physical object that fulfills performance requirements as well as cost requirements.

According to an embodiment, the computer-implemented method comprises, in the training phase, acquiring computer-aided design post-processing histories associated with the sequences of computer-aided design operations, wherein the post-processing histories include at least one of simplifying a design and adapting a design for a specific manufacturing process. Training the model includes learning post-processing rules. In the application phase, the method predicts at least one post-processing operation based on the trained model including the learned post-processing rules stored in the database, on the token of the current design sequence and on the vector of the design constraints. The method generates information including the predicted at least one post-processing operation and outputting the generated information in a signal to the user.

Thus, a transition from the product development phase to the manufacturing phase in the product life cycle of the physical object is regarded already in the product design phase of the physical object. The embodiment enables a cost-effective transition to the manufacturing phase.

The computer-implemented method according to an embodiment comprises, in the training phase, the metadata associated with the sequences of computer-aided design operations including a plurality of data samples comprising at least one of textual information describing the physical objects, a discretized volumetric mask of the physical objects, a point cloud representation of the physical objects, at least one image file of an image of the physical objects, and at least one video file of a video of the physical objects.

Hence, the trained model enables to determine the predicted sequence of computer-aided design operations and the suggestion output to the user using not only abstract CAD operations, but also combining illustrative information that is particularly useful to the young engineer with less experience in the CAD-based product design process.

According to an embodiment, the computer-implemented method comprises applying the machine-learning algorithm in a topology optimization, in particular a similarity-based topology optimization based on an energy-scaling method, a subjective drawing bidirectional evolutionary structural optimization, topology-based optimization guided by a geometrical pattern library. The method comprises imposing constraints on a geometry of the physical object using the topology optimization by generating reference designs based on a textual description of a new design process.

The machine learning model allows to generate designs from textual descriptions of the user. The generated designs may then serve as a reference to perform similarity-based topology optimization. Based on the stored model and the vectors that represent the designs in the database, a reference design is generated by the model from a text in put provided by the user. A topology optimization algorithm the generates novel designs by similarity based topology optimization from the reference design.

In the computer-implemented method according to an embodiment, in the training phase, the metadata associated with the sequences of computer-aided design operations includes at least one of textual descriptions for corresponding computer-aided design processes, computer-aided design process handbooks, and computer-aided design tutorials. In the application phase, the method comprises predicting the at least one computer-aided design operation based on the trained model stored in the database, and the at least one vector of the design constraints including a textual description of a new design process.

Hence, the computer-implemented method has the capability to start from a textual description prepared by the user with only low familiarity with the available database of historical design processes and rules guiding design processes, and to propose a sequence of computer-aided design operations that regards the respective available textual descriptions in the database. A highly efficient guidance to the user who has only limited experience in product design processes for physical objects is available.

In an embodiment, the computer-implemented method includes, in the training phase, applying the machine-learning algorithm for encoding the tokens of computer-aided design operations comprising clustering the sequences of computer-aided design operations according to physical objects by an unsupervised learning process. The method further comprises, in the application phase, generating information including the predicted at least one computer-aided design operation further including sets of design rules for a particular cluster of the physical objects.

In addition to the machine learning algorithm for encoding the tokens, a further machine learning algorithm is used for grouping (clustering) designs. For each of these clusters a set of design rules is derived, which is presented to the user.

Thus, the rules applicable to the respective cluster of physical objects accompany in the output information the suggested sequence of computer-aided design operation to the user, thereby providing additional insight and explanation for the suggested further procedure to the user. Acceptance of the suggested further sequence of computer-aided design operation, and the support provided by the intelligent CAD system generally, will increase.

The computer-implemented method according to an embodiment has, in the training phase, the acquired metadata associated with the sequences of computer-aided design operations including results from a numerical simulation of the physical objects, wherein the numerical simulation includes at least one of a finite element method, a finite volume method, and a finite difference method. The unsupervised learning process uses, in addition to the sequences of computer-aided design operations, the acquired results from the numerical simulation.

Thus, the suggested sequence of computer-aided operations in the application phase may regard available results of the numerical simulation without having to re-run the simulation for the design of the physical object.

In the computer-implemented method according to an embodiment, in the training phase, the acquired metadata includes a plurality of results from the numerical simulation of a physical object associated with a single sequence of computer-aided design operations, wherein the numerical simulations are associated with different times in the single sequence of computer-aided design operations.

Hence, the suggested sequence of computer-aided operations in the application phase may regard and provide available results of the numerical simulation to the user without having to re-run the simulation for the design of the physical object.

The computer-implemented method according to an embodiment comprises, in the training phase, generating automatically the sequences of computer-aided design operations by executing a machine-learning algorithm, in particular including at least one of CSGNet and CADOps-Net, for processing a plurality of designs of the physical objects obtained using a topology optimization algorithm.

Sharma, G., Goyal, R., Liu, D., Kalogerakis, E., & Maji, S. (2018). CSGNet: Neural shape parser for constructive solid geometry. In Proceedings of the IEEE Conference on Computer Vision and Pattern Recognition (pp. 5515-5523), discloses a deep neural network suitable for generating sequences of operations based on an input of a two-dimensional (2D) or 3D representation.

Dupont, E., Cherenkova, K., Kacem, A., Ali, S. A., Arzhannikov, I., Gusev, G., & Aouada, D. (2022). CADOps-Net: Jointly learning cad operation types and steps from boundary-representations. In 2022 International Conference on 3D Vision (3DV) (pp. 114-123). IEEE, presents with CADOps-Net a deep neural network that is conditioned on an input shape and reconstructs a sequence of operations.

The following description of embodiments of the computer-implemented method refers to an intelligent CAD system, which includes software that comprises an implementation of the computer-implemented method of an embodiment running on a hardware platform and including a human machine interface for interacting with a design engineer (user).

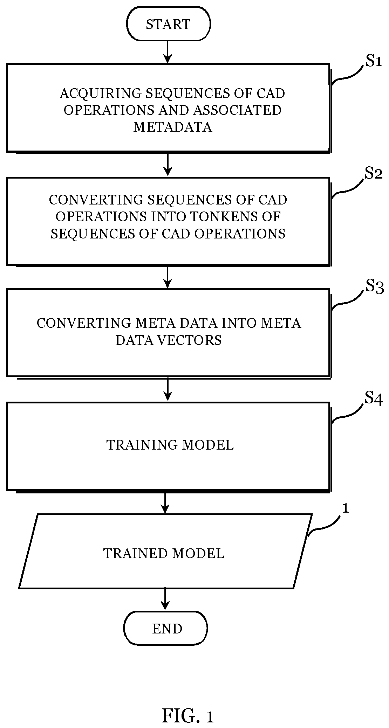

Fig. 1 illustrates a schematic flow diagram including steps of the training phase of a model in an embodiment of the computer-implemented method.

The computer-implemented method assists a user, e.g. a design engineer in generating a 3D design of a physical object. The computer-implemented method comprises a training phase for training a model based on training from database 2. The computer-implemented method performs the training phase offline. The trained model is used in an application phase for suggesting a user how to proceed further in order to generate a design of the physical object using the intelligent CAD system that includes the computer-implemented method. Computer aided design or CAD refers to the use of computers to support creation, modification, analysis, or optimization of a design, e.g. a 3D design of a physical object. Using a CAD system or CAD software increases the productivity of the design engineer, improves the quality of design, improves communication through documentation, and generates a database 2 for a subsequent manufacturing phase for producing the physical object based on the created design. CAD systems provide an output that has often the form of electronic files for controlling printing, machining or other manufacturing processes and manufacturing machines.

The 3D design of the physical object is a virtual design model of the physical object created by using the CAD system.

The computer-implemented method begins in the training phase, with a step S1 of acquiring sequences of computer-aided design operations and metadata associated with the sequences of computer-aided design operations.

A sequence of computer-aided design operations (CAD operations) comprises the actions performed sequentially by the user in the CAD system to generate the 3D design of the physical object.

In step S2, the method converts the acquired sequences of computer-aided design operations into tokens of computer-aided design operations.

Tokens are numerical values, e.g. an integer number representing a text sequence. The tokens of sequences of computer-aided design operations are numerical values, e.g. strings of numerical values or vectors that encode sequences of computer-aided design operations.

The process of tokenization performed in step S2 is a process, which converts, e.g. by a mapping, predefined slices of a sequence into an integer number (numerical value) referred to as token, which is utilized by a model for training and prediction tasks, by performing mathematical operations on the numerical values of the tokens.

In step S3, the method converts the acquired metadata into metadata vectors.

The computer-implemented method then performs a training step S4 that includes training a model based on the token of the computer-aided design operations and the metadata vectors.

The model is a machine learning model, in particular a mathematical model, e.g., a deep neural network, which is utilized to predict sequences of design operations based on a history of sequences of design operations, and the metadata including, e.g., a target application of the physical object and design constraints.

Training the model aims at tuning model parameters of the model to best represent the relationship between input and output variables of the model. Training the model includes using training data. During the training, many tokenized sequences of design operations are fed iteratively to the model as training input data, as well as the ideal output prediction in the form of the corresponding sequence of computer-aided design operations as training output data (ground-truth). Algorithms optimize the model parameters by minimizing the error between the predicted output of the model and actual output of the model included in the training data. When the training of the model is completed, the model parameters are fixed and stored. The trained model 1 is available for performing prediction tasks in a subsequent application phase of the trained model 1.

In particular, training the model includes learning model parameters of the model by performing learning in a deep neural network.

Model Parameters of the model are internal values of the model, which are updated during the training process in order to minimize the error between the predicted output generated by the model and the ground-truth from the training data.

In particular, training the model includes automatically applying a machine learning algorithm for encoding the tokens of computer-aided design operations in a plurality of vectors, wherein each vector corresponds to a computer-aided design operation.

In step S4, the method then stores the trained model in a database 2, in particular a database 2 stored in a data storage 53 for use during the application phase of the computer-implemented method.

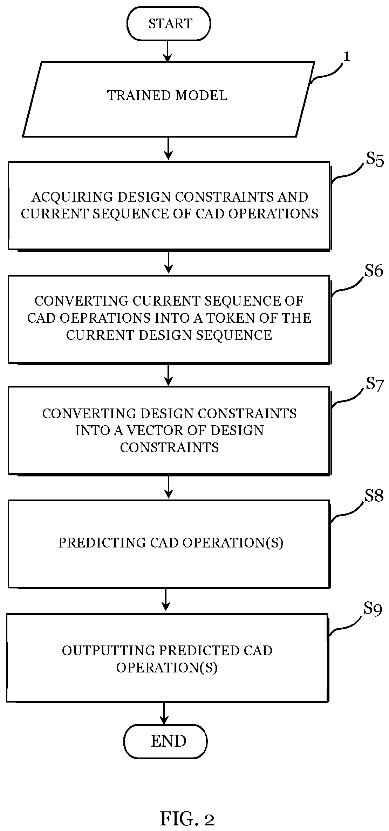

Fig. 2 shows a schematic flow diagram including steps of the application phase of applying the model for assisting the user in generating the 3D design of the physical object in an embodiment of the computer-implemented method. The application phase includes automatically and online executing the steps S5 to S9 in order to assist the user in generating the 3D design of the physical object.

In the application phase, the computer-implemented method begins with a step S5 of acquiring a user input including design preferences, e.g. design constraints of the user and a current sequence of computer-aided design operations.

The user guides the intended product design process by the design preferences provided to the intelligent CAD system.

The computer-implemented method in step S6 converts the acquired current sequence of computer-aided design operations into a token of the current design sequence.

In step S7, the method converts the acquired design constraints into a vector of design constraints. Steps S6 and S7 may be executed in parallel or time-sequentially.

In step S8, the computer-implemented method predicts at least one computer-aided design operation based on the trained model stored in the database 2, and at least one of the tokens of the current design sequence and the vector of the design constraints.

In step S9, the method generates information including the predicted at least one computer-aided design operation and outputs the generated information in a signal to the user.

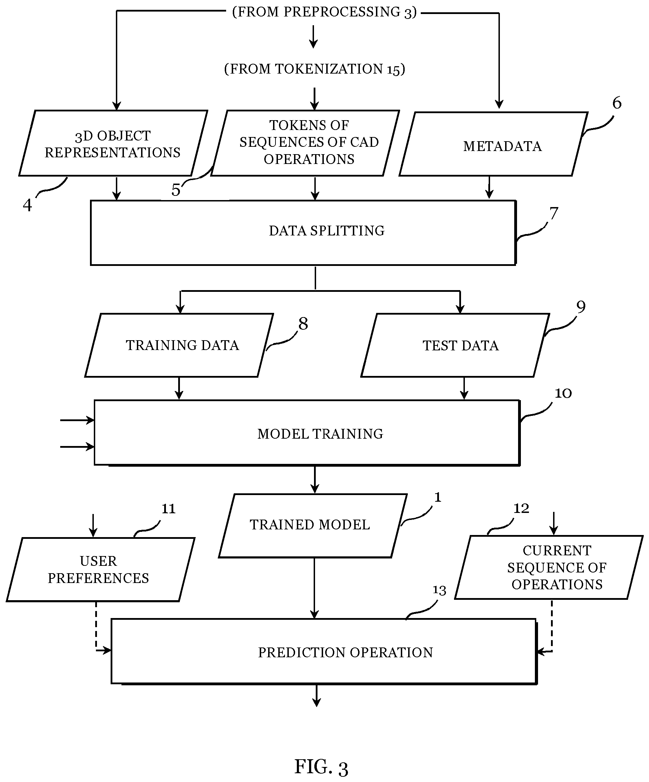

Fig. 3 illustrates a simplified workflow of the intelligent CAD tool according to an embodiment.

The computer-implemented method and the corresponding computer-implemented system 50 provide an intelligent CAD tool for cooperatively designing physical objects using CAD software. The system 50 comprises a database 2 that includes a plurality of stored CAD files. The system 50 further comprises a machine-learning model 1, which is trained offline on the CAD files in the database 2 in a training phase of the computer-implemented method.

Additionally, the system 50 may further comprise periodically re-training the machine-learning model 1 on the CAD files stored in the database 2 by re-entering the training phase of the computer-implemented method.

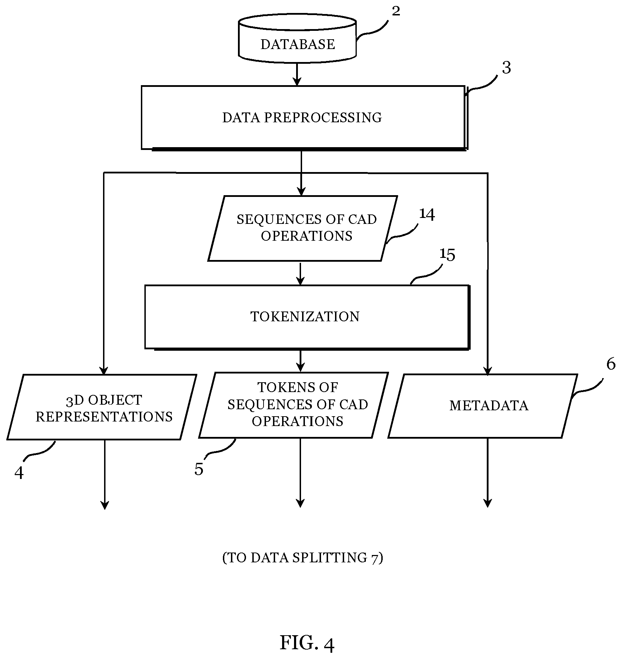

A preprocessing phase executed by the method on the information stored in the database 2 will be discussed with reference to fig. 4. The processing in the training phase in fig. 3 starts on three distinct type of information provided by the preprocessing based on the CAD files stored in the database 2.

The preprocessing further provides tokens of sequences of CAD operations 5 generated by tokenization from the preprocessed sequences of CAD operations stored in the database 2. Tokenization includes encoding preprocessed sequences of CAD operations into arrays of tokens.

The preprocessing provides 3D object representations 4 of physical objects associated with the respective preprocessed sequences of CAD operations. The 3D object representations include, e.g., a text describing the physical object, a discretized volumetric mask of the physical object, a point cloud representation of the physical object, images depicting the physical object, videos depicting the physical object, or output files of numerical simulations of the physical object. The preprocessing further provides metadata 6 associated with the respective preprocessed sequences of operations. Examples for the metadata 6 include information on cost of the physical object according to the sequence of CAD operations, information on a target manufacturing process for manufacturing the physical object according to the sequence of CAD operations, target application of the manufactured physical object, and an object description in text form.

In particular, the information including the metadata 6 and the 3D object representation 4 is in a vector data format.

The method provides the tokens of sequences of CAD operations 5, the associated metadata 4 and the associated 3D representations 6 to a data-splitting module 7. The data splitting module 7 splits the obtained information into training data 8 on the one hand and into test data 9 on the other hand.

The training data 8 corresponds to a set of data, which the computer-implemented method uses for training the model, in particular initializing and updating the model parameters of the model during the training.

The test data 9 corresponds to a set of data, which the computer-implemented method uses for evaluating an accuracy of the trained model, in particular evaluating an accuracy of the model trained model after the training the model with the training data 8.

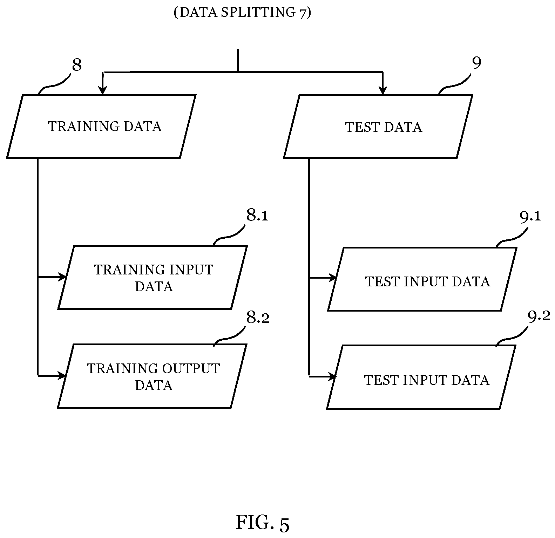

The training data 8 and the test data 9 are discussed further with reference to fig. 5.

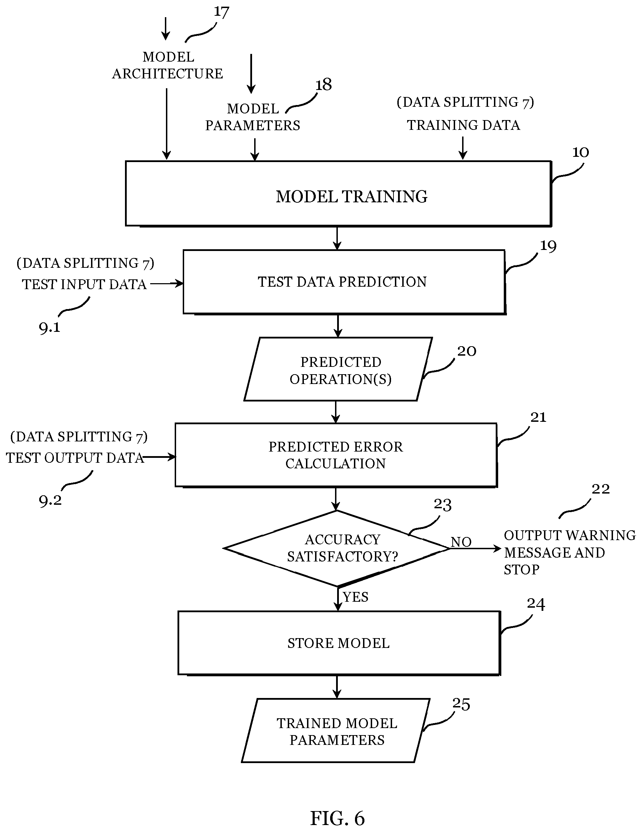

The computer-implemented method uses the training data 8 and the test data 9 together with information on the architecture of the model and information on the model parameters of the model in the model-training module 10. The model-training module 10 is illustrated in fig. 6 in more detail.

The model-training module 10 generates and tests the trained model 1. The trained model 1 is then stored in a data storage 53. In particular, the trained model parameters of the trained model 1 are stored for further use during the application phase.

In the application phase, the computer-implemented method performs prediction (suggestion) of at least one CAD operation, or a sequence of CAD operations, based on the trained and stored model 1, further based on obtained user preferences 11 in vector format and a current sequence of CAD operations 12 in form of tokens of the current sequence of operation.

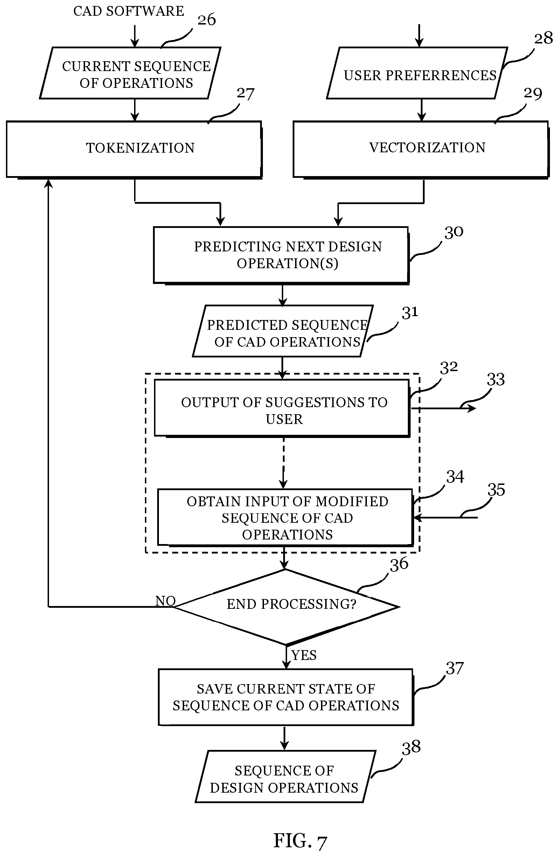

The prediction process performed in the prediction module 13 of the computer-implemented method is discussed in more detail with reference to fig. 7.

Fig. 4 illustrates a simplified workflow of the data preprocessing in the intelligent CAD tool according to an embodiment.

For the data preprocessing module 3, the computer-implemented method obtains information stored in the database 2.

The database 2 comprises a large set of stored data including CAD-compatible data files of physical objects. The stored data sets on the physical objects include sequences of CAD operations performed by designers for generating the physical objects.

The stored data sets on the physical objects may include representations of object boundaries of the physical objects, associated with the corresponding sequences of CAD operations, e.g., by reference to the respective physical objects.

The stored data sets on the physical objects may include design annotations of the physical objects, associated with the corresponding sequences of CAD operations, e.g., by reference to the respective physical objects.

The stored data sets on the physical objects may include information on a manufacturing process of the physical object, associated with the corresponding sequences of CAD operations, e.g., by reference to the respective physical object. The information on the manufacturing process may define an intended or preferred manufacturing process for producing the physical object based on the finalized design of the physical object when transiting from the product design phase to a manufacturing phase.

The stored data sets on the physical objects may include information on material used for manufacturing the physical objects, associated with the corresponding sequences of CAD operations, e.g., via a reference to the respective physical object.

The stored data sets on the physical objects may include information on cost associated with manufacturing the physical object, associated with the corresponding sequences of CAD operations, e.g., by reference to the respective physical object.

The stored information in the database 2 is correlated to manufacturing constraints and application characteristics of the physical objects.

The stored data sets in the database 2 may be obtained by data mining from publicly available data sources.

Additionally or alternatively, the stored data sets in the database 2 may be obtained by data mining from proprietary data sources.

The preprocessing module 10 obtains the information stored in the database 2 and converts the obtained information into a structure that is defined by the model architecture 17 of the model.

In particular, the preprocessing module 10 retrieves a sequence of CAD operations 5 that was generated and stored for each sample when a design was created, from the database 2, the corresponding geometric 3D representation 4, e.g., a polygonal mesh for the sample, and the associated metadata 6. The sample is the resulting design of the physical object when having executed the sequence of CAD operations 5.

The associated metadata 6 includes the field of application of the physical object corresponding to the design sample, the manufacturing process for manufacturing the physical object corresponding to the design sample, for example.

The preprocessing module 10 stores the converted information in a data storage 53 in the required data format according to the model architecture 17. The data storage 53, e.g. a hard disk, enables to access and retrieve the stored information during the training phase of the computer-implemented method for training the model.

The preprocessed sequence of CAD operations 14 is provided to the tokenization module 15. The tokenization module 15 converts a sequence of n CAD operations, in which the integer numeral n is varying from 1 to an arbitrary integer numeral k into an integer value. Using a variable length for the tokens of sequences of CAD operations 5 enables to feed segments of different lengths of a tree of CAD operations to the system, in the training phase as well as in the prediction phase of the computer-implemented method.

The tokenization module 15 performs a mapping from the obtained preprocessed sequence of CAD operations 14 to the corresponding tokens of sequences of CAD operations 5.

The tokenization module 15 performs a mapping that is predefined by the user of the computer-implemented method, The predefined mapping remains the same in the prediction phase after training the model in the training phase.

The user may update the mapping executed by tokenization module 15, anytime. Updating the mapping requires a re-training of the trained model 1 in order to fit the new parameterization of the updated mapping.

The preprocessing phase or the computer-implemented method generates and provides the preprocessed 3D object representations 4, the tokens of the sequences of the CAD operations 5, and the metadata 6 to the data-splitting module 7 as indicated in fig. 4 and discussed with reference to fig. 3.

Fig. 5 shows a simplified data structure of training data 8 and test data 9 generated in the data-splitting module 7 in the intelligent CAD tool according to an embodiment.

The training data 8 comprises training input data 8.1 and training output data 8.2.

The model-training module 10 uses the training data 8 for performing a machine learning process for learning model parameters of the model.

The training input data 8.1 includes set of training input data 8.1 that each include tokens of sequences of CAD operations 5 for a design of the physical object, associated object representations 4 of the physical object and associated metadata 6. Each set of training input data 8. 1 is associated with a respective set of training output data 8.2. The set of training output data 8.2 each includes the data output by the model in response to providing the set of training input data 8.1 to the model.

The test data 9 comprises test input data 9.1 and test output data 9.2. The test-data-prediction module 19 and the predicted-error calculation module 21 use the test data 9 for validating the learned model parameters of the learned model 1.

The test input data 9.1 includes set of test input data 9.1 that each include tokens of sequences of CAD operations 5 for a design of the physical object, associated object representations 4 of the physical object and associated metadata 6. Each set of test input data 9.1 is associated with a respective set of test output data 9.2. The set of test output data 9.2 includes the respective data output by the model in response to providing the set of test input data 9.1 to the model.

The training data 8 and the test data 9 provided by the data-splitting module 7 are input to the training phase of the computer-implemented method.

Fig. 6 illustrates a simplified workflow of the model training process in the training phase of the computer-implemented method according to an embodiment.

The model-training module 10 acquires information on the model architecture 17 and information on the model parameters 18. The model-training module 10 further obtains the training data 8 generated by the data-splitting module 7.

The model architecture 17 has the structure of a deep neural network. The model parameters 18 of the model correspond to the weights utilized by network operators of the deep neural network that are learned during the training process of the model-training module 10. The model parameters 18 are randomly initialized and stored in the data storage 53 after executing the training process. The weights determined offline during the training phase can be retrieved for prediction tasks in the prediction phase of the computer-implemented method that is executed online.

The model-training module 10 performs learning of the model parameters 18 based on the model architecture 17 and the sets of training data 8 including paired sets of training input data 8.1 and training output data 8.2. The training data 8 is used to update the model parameters 18 during the learning process executed by the model-training module 10.

After terminating the process of learning the model parameters 18, the method proceeds with validating the learned model parameters 18 by processing in a test-data prediction module 19, a predicted-error calculation module 21, and an accuracy determination module 23, using the test data 9 generated by the test-splitting module 7.

The test-data prediction module 19, predicted-error-calculation module 21, and accuracy determination module 23 evaluate the accuracy of the predictions provided by the trained model 1.

In particular, the test-data prediction module 19 predicts at least one predicted CAD operation, or predicted sequence of CAD operations 20 based on the trained model 1 and the test input data 9.1.

The predicted-error calculation module 21 then calculates a predicted error between the predicted sequence of CAD operations 20 basing on the test input data 9.1 and the test output data 9.2 associated with the test input data 9.1.

The accuracy determination module 23 compares the calculated error with a predetermined threshold. If the calculated error exceeds the predetermined threshold, the accuracy determination module 23 determines an unsatisfactory accuracy of the trained model 10 ("NO") and proceeds with generating and outputting a warning message to the user of the intelligent CAD system.

If the calculated error is smaller or equal to the predetermined threshold, the accuracy determination module 23 determines a satisfactory accuracy of the trained model 10 ("YES") and proceeds to the storing module 24 that stores the trained model 10, which corresponds now to a trained and tested model deemed fit for the application phase of the computer-implemented method.

The storing module 24 stores the trained model parameters 25 in the data storage 25 and the intelligent CAD system us the stored trained model parameters 25 in the application phase.

The training phase discussed with reference to fig. 6 may be repeated at regular or irregular time intervals or on instruction by the user.

Alternatively or additionally, retraining of the model and the model parameters 18 may be triggered when determining that an update of the data stored in the database 2 has occurred.

Fig. 7 illustrates a simplified workflow of an online prediction processing in the intelligent CAD system according to an embodiment.

In the application phase, the computer-implemented method acquires a current sequence of CAD operations 26. The current sequence of CAD operations 26 defines an initial design of the physical object.

A tokenization module 27 converts the current sequence of CAD operations 26 into tokens of the current sequence of the CAD operations. The tokenization module 27 corresponds to the tokenization module 15, in particular uses the same mapping as the tokenization module 15.

The computer-implemented method further acquires user preferences 28 (design preferences 28, design requirements 28). The design preferences 28 include the target application of the physical object for which a design created, and a target manufacturing process (intended manufacturing process), and text information on the physical object, e.g.. The textual information may include references to other physical objects, or instructions from design handbook(s) in order to cite some specific examples. The computer-implemented method proceeds with a vectorization module 29 converting the acquired design preferences 28 into vector format for further processing.

The method provides the generated tokens of the current sequence of CAD operations and the vectorized design preferences to the prediction module 30, which predicts at least one next CAD operation, or sequence of CAD operations based on the input and the trained model 1. In particular, the prediction module 30 retrieves the learned model parameters 25 (trained model parameters 25) and performs prediction process for predicting the sequence of CAD operations.

The prediction module 30 of the application phase corresponds to the test-data-prediction module 19 of the training phase.

The predicted sequence of CAD operations 31 is then provided to a human machine interface (HMI) as a basis for generating and outputting suggestions in an output signal 33 to the user by the output module 34.

The HMI receives a user input 35 via the input module 34 of the HMI of the intelligent CAD system.

The user input 35 may include a stop instruction issued by the user. In case of receiving the stop instruction issued from the user via the input signal 35, the method determines in the processing termination module 36 that a stop criterion has been met ("YES"). In case of meeting the stop criterion, the method stores the current state of the sequence of CAD operations 38 that corresponds to the predicted sequence of CAD operations 31 in the database 2.Alternatively, the user input 35 may include a modified sequence of CAD operations provided by the user in response to the output signal 33 from the intelligent CAD system to the user.

The output module provides to the user in the output signal 33, in particular suggestions how to modify the initial design of the physical object by the predicted sequences of CAD operations 31.

The method then determines in the processing termination module 36 that the stop criterion has not been met ("YES") and proceeds with providing the modified sequence of CAD operations received from the user to the tokenization module 27 for a further iteration of predicting a sequence of CAD operations, based on the tokens of the modified sequence of CAD operations received from the user.

The intelligent CAD system may, together with outputting the design suggestions, the output designs stored in and retrieved from the database 2 that result from similar sequences of CAD operations, which enables the user to include additional preferences based on these output designs for a next interaction cycle with the HMI of the intelligent CAD system.

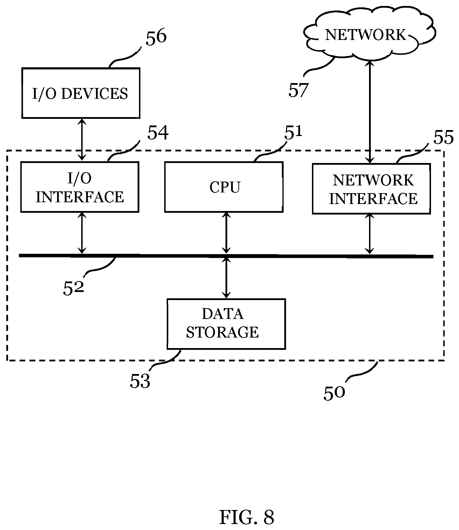

Fig. 8 presents a schematic of an overview on a high level of abstraction of an architecture of computer hardware elements suitable for running an embodiment of the method, in particular as an element of an intelligent CAD design tool useful for design engineers.

The system 50 of fig. 8 includes a processor 51, a data storage 53 (memory 53), a input/output interface 54, and a network interface 55, which are all linked by a data bus 55.

The input/output interface 54 may in particular provide a capability to output information via visual or audible signals obtain to a human user. The input/output interface 54 also provides the capability to obtain information and commands from the human user.

The input/output interface 54 may provide the capability to provide information to a other devices, e.g. automated manufacturing equipment for manufacturing a physical object based on the generated information from the intelligent CAD tool.

The input/output interface 54 represents an interface for connecting input/output devices 56 including, but not limited to keyboards, mouse, pointing devices, displays, microphones, loudspeakers in any combination.

The input/output interface 24 may at least in part be implemented in software modules running on the processor 51.

The processor 51 may be any type of controller or processor, and may even be embodied as one or more processors 51 adapted to perform the functionality discussed herein. As the term processor is used herein, the processor 21 may include using a single integrated circuit (IC), or may include use of a plurality of integrated circuits or other components connected, arranged or grouped together, such as controllers, microprocessors, digital signal processors (DSP), parallel processors, multiple core processors, custom ICs, application specific integrated circuits (ASIC), field programmable gate arrays (FPGAs). The processor 51 may further include adaptive computing ICs and associated memory, e.g. RAM, DRAM and ROM, and other ICs and components. Hence, the term processor 51 should be understood to equivalently mean and include a single IC, or arrangement of custom ICs, ASICs, processors, microprocessors, controllers, FPGAs, adaptive computing ICs, or some other grouping of integrated circuits which perform the functions discussed for the computer-implemented method, with associated memory, such as microprocessor memory or additional RAM, DRAM, SDRAM, SRAM, MRAM, ROM, FLASH, EPROM or E2 PROM. The processor 51 with its associated memory, may be adapted or configured via programming, FPGA interconnection, or hard-wiring to perform the methodology of the computer-implemented method. For example, the method may be programmed and stored, in the processor 51 with its associated memory or memory 53, and other equivalent components, as a set of program instructions or other code for subsequent execution when the processor 51 is operative, e.g. powered on and functioning.

The memory 53, which may include a data repository or database 2, may be embodied in any number of forms, including within any computer or other machine-readable data storage medium, memory device or other storage or communication device for storage or communication of information, including, but not limited to, a memory IC, or memory portion of an integrated circuit, e.g., a resident memory within a or processor 51, whether volatile or non-volatile, whether removable or non-removable, including without limitation RAM, FLASH, DRAM, SDRAM, SRAM, MRAM, FeRAM, ROM, EPROM or E2 PROM, or any other form of memory device, such as a magnetic hard drive, an optical drive, a magnetic disk or tape drive, a hard disk drive, other machine-readable storage or memory media such as a floppy disk, a CDROM, a CD-RW, digital versatile disk (DVD) or other optical memory, or any other type of memory, storage medium, or data storage apparatus or circuit, know. In addition, such computer readable media includes any form of communication media which embodies computer readable instructions, data structures, program modules or other data in a data signal or modulated signal, such as an electromagnetic or optical carrier wave or other transport mechanism, including any information delivery media, which may encode data or other information in a signal, wired or wirelessly, including electromagnetic, optical, acoustic, RF or infrared signals, and so on. The memory 53 may be adapted to store various look up tables, parameters, coefficients, other information and data, programs or instructions of the software of the present disclosure, and other types of tables such as database tables.

The processor 51 is programmed, using software and data structures of the disclosed computer-implemented method, for example, to perform the methodology of the present disclosure. Consequentially, the system 50 and the computer-implemented method of the present invention may be embodied as software which provides such programming or other instructions, such as a set of instructions and/or metadata embodied within a computer readable medium, discussed above. In addition, metadata may also be utilized to define the various data structures of a look up table or a database 2. Such software may be in the form of source or object code, by way of example and without limitation. Source code further may be compiled into some form of instructions or object code including assembly language instructions or configuration information. The software, source code or metadata of the present invention may be embodied as any type of code, such as C, C++, SystemC, LISA, XML, Java, Brew, SQL and its variations, e.g., SQL 99 or proprietary versions of SQL, DB₂, Oracle, or any other type of programming language which performs the functionality discussed herein, including various hardware definition or hardware modeling languages (e.g., Verilog, VHDL, RTL) and resulting database files (e.g., GDSII). As a consequence, a "construct", "program construct", "software construct" or "software", as used equivalently herein, means and refers to any programming language, of any kind, with any syntax or signatures, which provides or can be interpreted to provide the associated functionality or methodology specified when instantiated or loaded into a processor or computer and executed, including the processor 51, for example.

The software, metadata, or other source code of the present invention and any resulting bit file (object code, database 2, or look up table) may be embodied within any tangible storage medium, such as any of the computer or other machine-readable data storage media, as computer-readable instructions, data structures, program modules or other data, such as discussed above with respect to the memory 53, e.g., a floppy disk, a CDROM, a CD-RW, a DVD, a magnetic hard drive, an optical drive, or any other type of data storage apparatus or medium, as mentioned above.

The network interface 55 provides the system 50 with the capability to link to external databases and servers via a communication network 57. The network interface 55 in particular enables to implement the system 50 in a spatially distributed manner by performing at least some of the individual method steps at least in part remote from the system 50.

All steps which are performed by the various entities described in the present disclosure as well as the functionalities described to be performed by the various entities are intended to mean that the respective entity is adapted to or configured to perform the respective steps and functionalities.

In the claims as well as in the description the word "comprising" does not exclude the presence of other elements or steps. The indefinite article "a" or "an" does not exclude a plurality.

All features described above or features shown in the figures can be combined with each other in any advantageous manner within the scope of the disclosure. In the detailed discussion of embodiments, numerous specific details were presented for providing a thorough understanding of the invention defined in the claims. It is evident that putting the claimed invention into practice is possible without including all the specific details.

In the specification and the claims, the expression "at least one of A and B" may replace the expression "A and/or B" and vice versa due to being used with the same meaning. The expression "A and/or B" means "A, or B, or A and B".

## Claims

1. A computer-implemented method for assisting a user in generating a 3D design of a physical object, the method comprising the steps of:
in a training phase,
acquiring (S1) sequences of computer-aided design operations for designs of physical objects and metadata (6) associated with the sequences of computer-aided design operations (14),
converting (S2) the acquired sequences of computer-aided design operations into tokens of computer-aided design operations (5),
converting (S3) the metadata (6) into metadata vectors,
training (S4, 10) a model based on the tokens of the computer-aided design operations (5) and the metadata vector, and storing the trained model (1) in a database (2); and
in an application phase,
acquiring (S5) a user input for the design of the physical object including design constraints (11, 28) and a current sequence of computer-aided design operations (12, 26),
converting (S6, 27) the acquired current sequence of computer-aided design operations (12) into one or more tokens of the current design sequence,
converting (S7, 29) the acquired design constraints (11) into a vector of design constraints,
predicting (S8, 13) at least one computer-aided design operation (31) based on the trained model (1) stored in the database (2), and the one or more tokens of the current design sequence and the vector of the design constraints,
generating information including the predicted at least one computer-aided design operation (31) and outputting (S9, 32) the generated information in a signal (33) to the user.

2. The computer-implemented method according to claim 1, wherein the method comprises,
in the training phase,
training (S4) the model by automatically applying a machine learning algorithm for encoding the tokens of computer-aided design operations (5) in a plurality of vectors, wherein each vector corresponds to a computer-aided design operation or a sequence of computer-aided design operations (14), and
storing the plurality of vectors in the database (2).

3. The computer-implemented method according to claim 1 or 2, wherein the method comprises
in the application phase,
obtaining (S5) automatically the sequence of computer-aided design operations (14) that the user executes online while the user is designing the physical object using a computer-aided design system.

4. The computer-implemented method according to one of the preceding claims, wherein the method comprises
in the application phase,
obtaining a field of application of the physical object, and including (S7) the obtained field of application in the vector of design constraints.

5. The computer-implemented method according to one of the preceding claims, wherein
the metadata (6) associated with at least one of the sequences of computer-aided design operations (14) for a design of a target object comprises information on at least one of design objectives, design constraints, mechanical performance of the target object, in particular simulated mechanical performance from a numerical simulation, manufacturing process of the target object, and field of application of the target object of the respective one of the sequence of computer-aided design operations (14).

6. The computer-implemented method according to one of claims 2 to 5, wherein the method comprises
in the application phase,
determining distances between vectors encoding the current sequence of computer-aided design operations (12) and vectors encoding sequences of computer-aided design operations stored in the database (2),
determining similarities of the current sequence of computer-aided design operations (12) with sequences of computer-aided design operations (14) based on the determined distances, and
identifying at least one other design of a physical object based on the determined similarities, and
generating and outputting (32) information including a design representation of the identified at least one other design of a physical object to the user.

7. The computer-implemented method according to one of claims 2 to 6, wherein the method comprises,
in the training phase,
training (S4) the model includes using the stored vectors as features for the machine learning algorithm for classifying the physical objects into different categories according to functional type or manufacturing process of the physical objects.

8. The computer-implemented method according to one of claims 2 to 7, wherein the method comprises,
in the training phase,
training (S4) the model includes using the stored vectors as features for the machine learning algorithm for predicting at least one of a structural performance of the physical objects or manufacturing cost of the physical objects.

9. The computer-implemented method according to one of claims 2 to 8, wherein the method comprises,
in the training phase,
acquiring computer-aided design post-processing histories associated with the acquired sequences of computer-aided design operations (14), wherein the post-processing histories include at least one of simplifying the designs and adapting the designs for a specific manufacturing process, and
training (S4, 10) the model includes learning post-processing rules, and,
in the application phase,
predicting (S8) at least one post-processing operation based on the trained model (1) including the learned post-processing rules stored in the database (2), the token of the current design sequence and the vector of the design constraints,
generating information including the predicted at least one post-processing operation and outputting (32) the generated information in a signal (33) to the user.

10. The computer-implemented method according to one of claims 2 to 9, wherein
the metadata (6) associated with the sequences of computer-aided design operations (14) includes a plurality of information samples comprising at least one of textual information describing the physical objects, a discretized volumetric mask of the physical objects, a point cloud representation of the physical objects, at least one image file of an image of the physical objects, and at least one video file of a video of the physical objects.

11. The computer-implemented method according to one of claims 2 to 10, wherein the method comprises,
applying the machine learning algorithm in a topology optimization, in particular a similarity-based topology optimization based on an energy-scaling method, a subjective drawing bidirectional evolutionary structural optimization, topology-based optimization guided by a geometrical pattern library, and,
imposing constraints on a geometry of the physical object using the topology optimization by generating reference designs based on a textual description of a new design process.

12. The computer-implemented method according to one of claims 1 to 11, wherein the method comprises,
in the training phase,
the metadata (6) associated with the sequences of computer-aided design operations (14) includes at least one of textual descriptions for corresponding computer-aided design processes, computer-aided design process handbooks, and computer-aided design tutorials, and
in the application phase,
predicting (S8, 13) the at least one computer-aided design operation based on the trained model (1) stored in the database (2), and based on the vector of the design constraints that includes a textual description of a new design process.

13. The computer-implemented method according to one of claims 2 to 12, wherein,
in the training phase,
applying the machine learning algorithm for encoding (S2) the tokens of computer-aided design operations (5) comprises clustering according to the physical objects the sequences of computer-aided design operations (14) in an unsupervised learning process, and
in the application phase,
generating information including the predicted at least one computer-aided design operation (20) further including sets of design rules for a particular cluster of the physical objects.

14. The computer-implemented method according to claim 13, wherein,
in the training phase,
the acquired metadata (6) associated with the sequences of computer-aided design operations (14) includes results from a numerical simulation of the physical objects, wherein the numerical simulation includes at least one of a finite element method, finite volume method, and finite difference method, and
the unsupervised learning process uses, in addition to the sequences of computer-aided design operations (14), the acquired results from the numerical simulation.

15. The computer-implemented method according to claim 14, wherein,
in the training phase,
the acquired metadata (6) includes a plurality of results from the numerical simulation of a physical object associated with a single sequence of computer-aided design operations (14), wherein the numerical simulations are associated with different times of the single sequence of computer-aided design operations (14).

16. The computer-implemented method according to one of claims 1 to 15, wherein, the method comprises,
in the training phase,
generating automatically the sequences of computer-aided design operations (14) by executing a machine learning algorithm, in particular including at least one of CSGNet and CADOpsNet, for processing a plurality of designs of the physical objects obtained by running a topology optimization algorithm.

17. A computer program comprising program-code means for executing the steps of the method according to one of the preceding claims, when the program is executed on a computer or digital signal processor.
